# EUROPEAN PATENT SPECIFICATION

(11) **EP 4 538 778 B1**
(45) Date of publication and mention of the grant of the patent: **28.10.2026**
(21) Application number: 25159644.1
(22) Date of filing: 20.02.2019
(51) Int. Cl.: G02C 5/06, B29D 12/02

(54) **METHOD OF CONSTRUCTING AN EYEWEAR WITH A FLEXIBLE BRIDGE ASSEMBLY**
VERFAHREN ZUM HERSTELLEN EINER BRILLE MIT EINER FLEXIBLEN BRÜCKENANORDNUNG
PROCÉDÉ DE CONSTRUCTION DE LUNETTES AVEC UN ENSEMBLE PONT FLEXIBLE

(30) Priority: 20.02.2018 US 201862632921 P
(43) Date of publication of application: 16.04.2025
(62) Document number(s) of the earlier application(s) in accordance with Art. 76 EPC: 19756485.9 / 3 756 040
(73) Proprietor: Sheldon, Brent, Miami Beach, Florida 33139 (US)
(72) Inventor: SHELDON, Brent, 33139 Miami Beach (US); BROUSSEAU, Guy, Québec, J3M 0A5 (CA)
(74) Representative: Ribeiro, James Michael

(56) References cited:
- EP-A1- 0 718 660
- FR-A3- 3 010 539
- US-A- 3 395 964
- US-A1- 2006 109 419
- US-A1- 2009 015 783
- US-A1- 2016 223 840
- US-B2- 9 527 252

## Description

### CROSS-REFERENCE TO RELATED APPLICATION(S)

This application claims the benefit of priority to U.S. Provisional Patent Application No. 62/632,921 filed on February 20, 2018.

### TECHNICAL FIELD

The following relates to flexible bridges for eyewear, and methods of assembling eyewear to incorporate such flexible bridges.

### BACKGROUND

Eyewear such as eyeglasses generally include a frame that supports one or more lenses. The frame typically includes a nose bridge or nose pieces that engage the user's nose to support the eyewear on the user's head. Eyeglasses also typically include a pair of arms attached to (or integral with) the frame, to further support the eyeglasses, e.g. by resting the arms on the user's ears or engaging their head in the temple region. Other eyewear may include other support elements such as straps or bands (e.g., in sports goggles).

Eyeglasses have traditionally utilized frames or frame components made from substantially rigid materials such as plastics, metals, or composite materials. The rigidity of these materials supports the lenses in the frames, and substantially maintains the shape of the eyeglasses such that they consistently fit on a user's head as intended. A drawback of this rigidity is that the frames can only typically withstand some flexure and can be prone to breakage or deformation.

Flexible components have been used in eyewear, for example, flexible arms and flexible portions of the eyewear frames such as in document US9527252B2. Various challenges can arise in construction, assembly, and use when incorporating flexible elements. For example, the flexibility should not cause the frames to deform and thus lose their shape over time. Other challenges include assembly complexities and costs associated with using multiple different materials. Components made of rigid material and components made of flexible material generally can find difficulties adhering to each other, and may require a joining mechanism that should be easy to assemble while also being durable and provide a strong joint.

It is an object of the following to address at least one of the above-noted disadvantages.

### SUMMARY

The scope of protection as claimed relates to a method of constructing an eyewear, the eyewear including a flexible bridge assembly. In one aspect, there is provided a flexible bridge assembly for eyewear comprising: a flexible bridge portion having a first recess at one end, and a second recess at another end; a first rigid attachment member connected at a first end thereof to the first recess; and a second rigid attachment member connected at a first end thereof to the second recess; wherein second ends of the first and second rigid attachment members provide attachment portions for first and second lens retainers of eyewear.

In another aspect, there is provided a flexible bridge assembly for eyewear comprising: a flexible bridge; a first rigid connecting end embedded in the flexible bridge at one end; and a second rigid connecting end embedded in the flexible bridge at the other end; wherein the first and second connecting ends provide attachment portions for joining the flexible bridge assembly to first and second lens retainers of eyewear.

In yet another aspect, there is provided a flexible bridge assembly for eyewear comprising: a first rigid attachment member having at least one prong and at least one slot; a second rigid attachment member having at least one prong and at least one slot; a flexible bridge portion; a first lens retainer having at least one recess; and a second lens retainer having at least one recess; wherein the prongs of the first rigid attachment members provide an attachment portion for the recess of the first lens retainer; and the prongs of the second rigid attachment members provide an attachment portion for the recess of the first lens retainer.

In other aspects, there is provided an eyewear assembly comprising one of the above flexible bridge assemblies.

In an implementation, the rigid attachment members are secured to the flexible bridge by the insertion of a fastener, such as cured resin. In another implementation, the flexible bridge is overmolded over the rigid attachment members.

### BRIEF DESCRIPTION OF THE DRAWINGS

Embodiments will now be described with reference to the appended drawings wherein:
FIG. 1 is a perspective view of eyewear with a flexible bridge assembly;
FIG. 2 is an exploded perspective view of the eyewear shown in FIG. 1;
FIG. 3a is an enlarged partial exploded perspective view of the flexible bridge assembly shown in FIG. 1;
FIG. 3b is an enlarged partial exploded perspective view of the flexible bridge assembly shown in FIG. 1, with transparency used to illustrate interior components;
FIG. 4a is an enlarged partial perspective view of the flexible bridge assembly shown in FIG.1, with transparency used to illustrate interior components;
FIG. 4b is an enlarged partial perspective view of the flexible bridge assembly shown in FIG. 1;
FIG. 5 is a cross-sectional view of the flexible bridge assembly shown in FIG. 4b along line V-V;
FIG. 6 is an enlarged partial perspective view of a flexible bridge assembly utilizing an alternative fastening mechanism;
FIG. 7 is a perspective view of the mounting members used in the flexible bridge assembly of FIG. 6, shown in isolation;
FIG. 8 is a perspective view of the flexible bridge assembly of FIG. 6, shown in isolation;
FIG. 9 is a cross-sectional view of the flexible bridge assembly shown in FIG. 6 along line IX-IX;
FIG. 10 is an enlarged partial perspective view of a flexible bridge assembly utilizing an alternative connection mechanism;
FIG. 11 is a perspective view of the mounting members used in the flexible bridge assembly of FIG. 10, shown in isolation;
FIG. 12 is a perspective view of the flexible bridge assembly of FIG. 10, shown in isolation;
FIG. 13 is an exploded partial perspective view of the flexible bridge assembly of FIG. 10;
FIG. 14 is an exploded partial front view of the flexible bridge assembly of FIG. 10;
FIG. 15 is an exploded partial front view of the flexible bridge assembly of FIG. 10;
FIG. 16 is an enlarged partial front view of the flexible bridge assembly shown in FIG.10, with transparency used to illustrate interior components;
FIG. 17a is an exploded partial front view of the flexible bridge assembly utilizing an alternative prong design;
FIG. 17b is an exploded partial perspective view of the lens retainer utilizing an alternative recess design;
FIG. 18 is an exploded partial front view of the flexible bridge assembly utilizing another alternative prong design;
FIG. 19 is an exploded partial front view of the flexible bridge assembly utilizing yet another alternative prong design;
FIG. 20 is an exploded partial front view of the flexible bridge assembly utilizing yet another alternative prong design.

### DETAILED DESCRIPTION

To provide flexibility in eyewear such as eyeglasses, sunglasses, safety eyewear and the like; a flexible bridge assembly can be utilized, in which rigid attachment members are at least partially contained or embedded in a flexible body to provide attachment points to lens retainers in the eyewear, with the flexible body therebetween allowing flexibility of the eyewear at or about the bridge area.

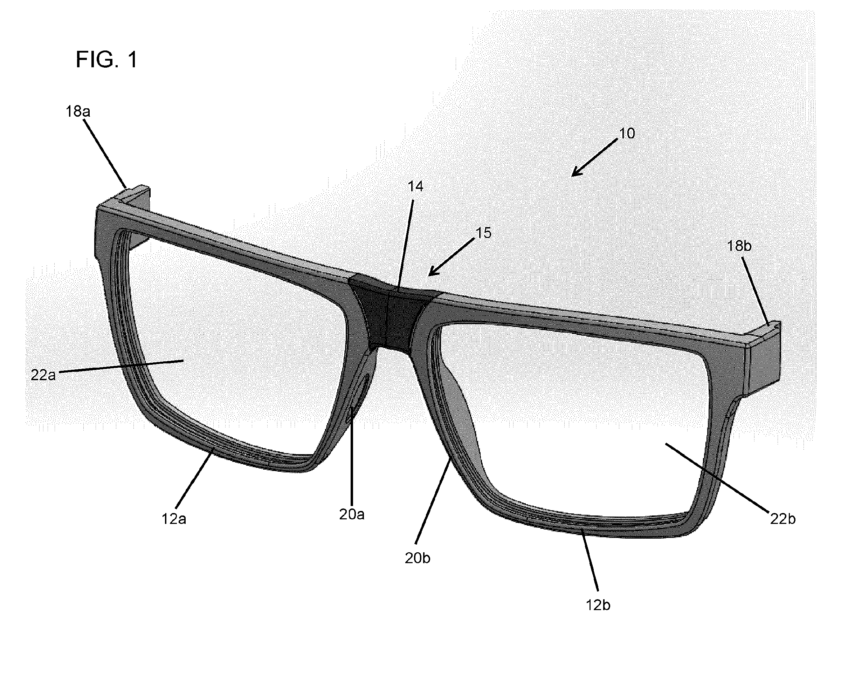

Turning now to the figures, FIG. 1 provides a perspective view of an assembled eyewear 10, also referred to interchangeably herein as an eyewear assembly 10 or eyewear 10 for brevity. The eyewear 10 includes a pair of separate lens retainers 12, in this example a first lens retainer 12a and a second lens retainer 12b. The lens retainers 12a, 12b may be adapted to hold lenses, specifically in this example a first lens 22a is held by first lens retainer 12a and a second lens 22b is held by second lens retainer 12b. A first arm 18a is connected to the first lens retainer 12a, and a second arm 18b is connected to the second lens retainer 12b. The first lens retainer 12a includes or otherwise supports a first nose piece 20a, and the second lens retainer 12b includes or otherwise supports a second nose piece 20b. The nose pieces 20 may also be referred to as, or considered to be, nose engaging portions or nose pads. Moreover, the nose pieces 20 shown in FIG. 1 are for illustrative purposes only.

The lens retainers 12a and 12b are connected to each other via a flexible bridge assembly 15, which as shown in greater detail below, includes a flexible bridge portion 14, also referred to interchangeably herein as the bridge portion 14. The lens retainers 12a and 12a are connected to the bridge assembly 15 such that they are positioned on either side of the user's head and aligned with their eyes. The flexible bridge assembly 15 enables the eyewear 10 to be flexed such that the lens retainers 12a, 12b and arms 18a, 18b attached thereto can be bent or otherwise separated or twisted relative to each other. This allows, for example, a user to slightly flex the arms 18a, 18b away from each other when placing the eyewear 10 on their head, with resiliency in the flexible bridge portion 14 causing the arms 18a, 18b to return towards each other and seat against the user's head and on their ears. The flexibility also resists breakage of the lens retainers 12a, 12b by permitting them to flex, twist, and to a certain extent, fold, e.g. if the eyewear 10 falls, is sat upon by the user, is stuffed into a purse or bag, etc.

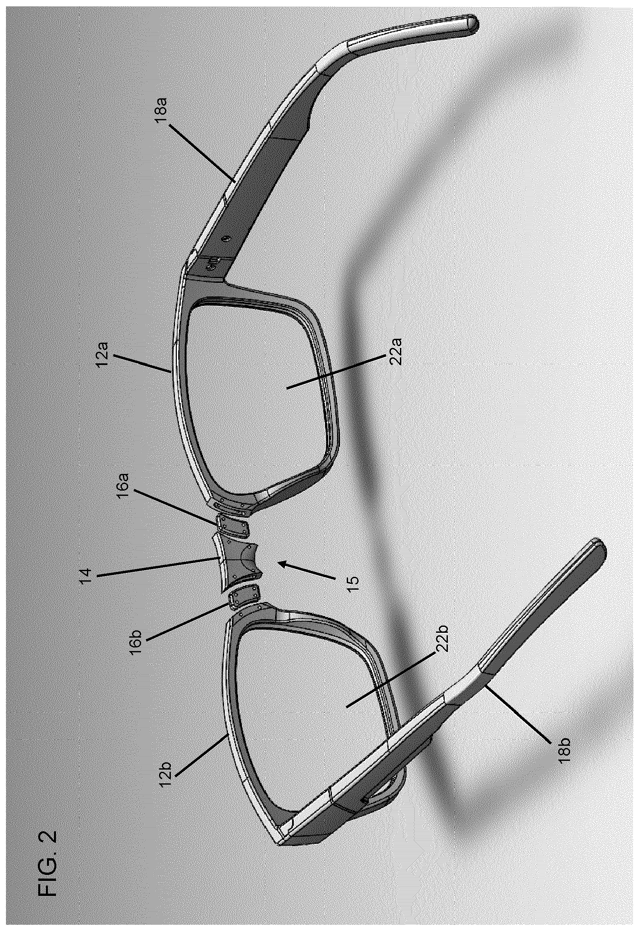

The components of the flexible bridge assembly 15 and the manner in which the assembly 15 connects to the lens retainers 12a, 12b is illustrated in FIG. 2. The flexible bridge portion 14 may be constructed from an elastomer such as thermoplastic polyurethane (TPU), rubber or thermoplastic rubber (TRP), soft plastic, or any other suitable material. The lens retainers 12a, 12b may be made from plastic, wood, acetate, or another suitable rigid material. The flexible bridge assembly 15 and the lens retainers 12a, 12b are joined to each other using rigid attachment members 16, also referred to interchangeably herein as mounting members 16. The mounting members 16 in this example are relatively thinner than the flexible bridge portion 14 and lens retainers 12, to allow them to be at least partially embedded or contained therein. In this example the first lens retainer 12a is attached to the flexible bridge assembly 15 by a first attachment member 16a, and the second lens retainer 12b is attached to the other side of the flexible bridge assembly 15 by a second attachment member 16b. This effectively couples the first lens retainer 12a to the second lens retainer 12b via the flexible bridge portion 14 to provide the aforementioned flexibility and resiliency. The mounting members 16 may be made metal, carbon fiber, plastic, or any other suitable rigid material.

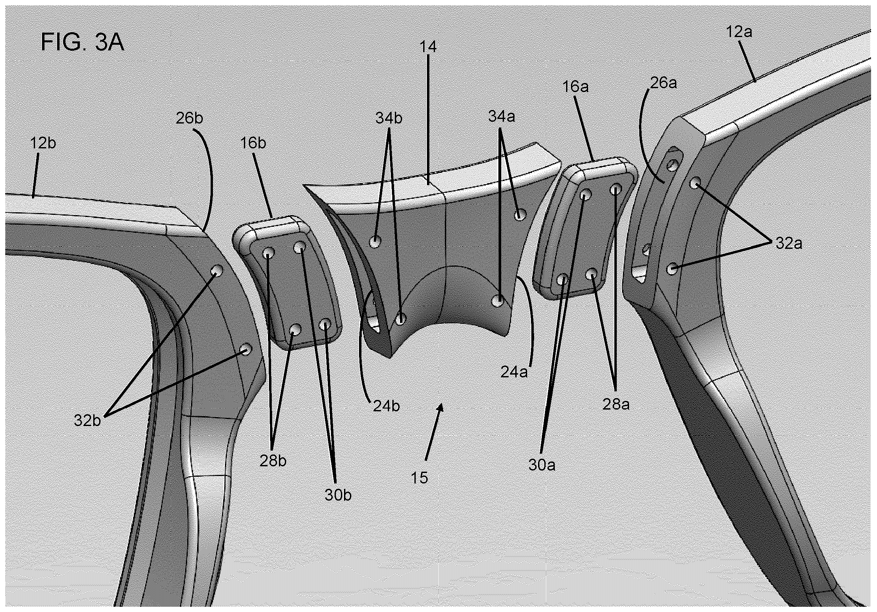

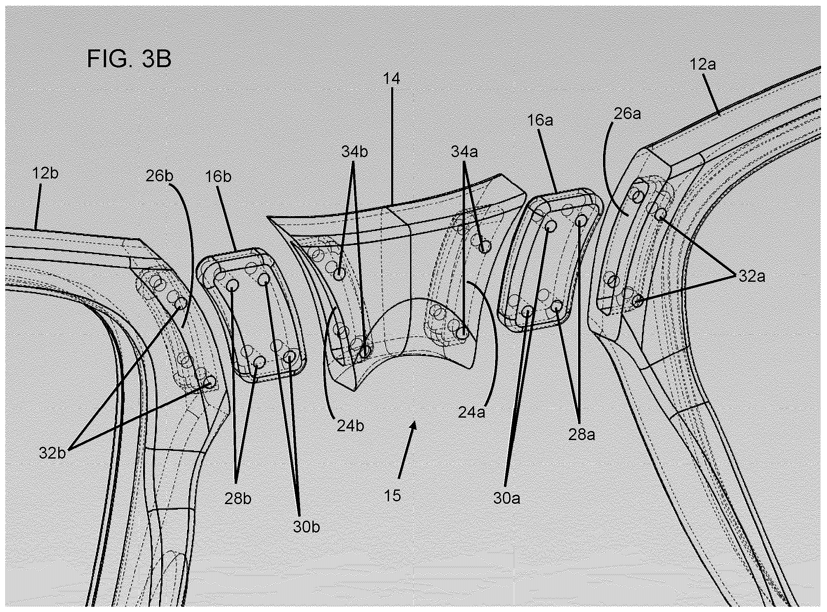

Additional details of the components and manner of assembling the flexible bridge assembly 15 to and with the lens retainers 12a, 12b are apparent from the enlarged exploded partial perspective views illustrated in FIGS. 3a and 3b. It can be observed that the lens retainers 12a, 12b are constructed with slots, notches or recesses 26. The recesses 26 are shaped and contoured to be complementary to the outwardly extending ends of the corresponding attachment members 16 such that the recesses 26 can accept a portion of the mounting members 16a, 16b for attachment thereto. In this example, first lens retainer 12a has a first lens retainer recess 26a, and second lens retainer 12b has a second lens retainer recess 26b. Flexible bridge portion 14 is constructed to include a bridge recess 24 at each end, such that one bridge recess 24 faces each lens retainers 12a, 12b to accept the other end of the attachment members 16. That is, the bridge recesses 24 are sized and contoured to be complementary to and accept the other ends of mounting members 16a, 16b. One end of first mounting member 16a may be inserted into a first bridge recess 24a, and one end of second mounting member 16b may be inserted into a second bridge recess 24b.

In this example, the lens retainers 12 are each provided with one or more lens retainer passages 32 that pass from the rear face of the lens retainers 12a, 12b, through the respective lens retainer recesses 26 and partially through the front face of the lens retainer 12 (i.e. countersunk into the front face). Specifically, in this example, the first lens retainer 12a has a pair of first lens retainer passages 32a and the second lens retainer 12b has a pair of first lens retainer passages 32b. It can be appreciated that any suitable number of passages 32 can be provided. The lens retainer passages 32a, 32b extend to both sides of the lens retainer recesses 26a, 26b to align with passages in the attachment members 16 as described below. Similarly, the flexible bridge portion 14 is provided with a set of one or more bridge passages 34 on both sides thereof, which pass through the respective bridge recesses 24 in a similar manner, in order to align with further passages in the attachment members 16 as described below.

The mounting members 16a, 16b are each provided with a first set of one or more passages 28 on the lens retainer side, and a second set of one or more passages 30 on the flexible bride portion side. It is preferred that there be the same number of lens retainer passages 32 as first set of passages 28, and likewise the same number of bridge passages 34 as second set of passages 30. In this example, the first mounting member 16a has a pair of first passages 28a and a pair of second passages 30a. Similarly, the second mounting member 16b has a pair of its own first passages 28b and a pair of its own second passages 30b. As can be appreciated from the views shown in FIGS. 3a and 3b, the sets of passages described above are provided to be in alignment to allow the attachment members 16 to be secured to both the flexible bridge portion 14 and the lens retainers 12 as described in greater detail below.

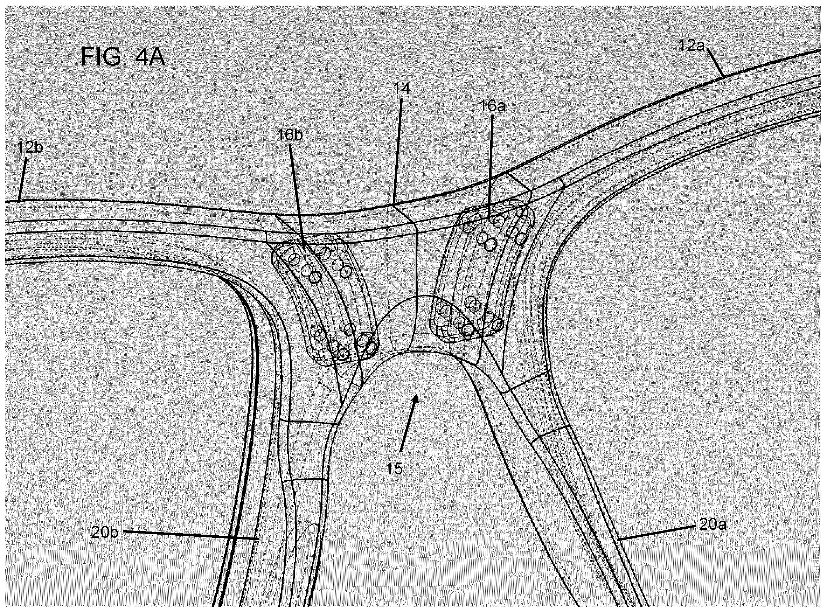

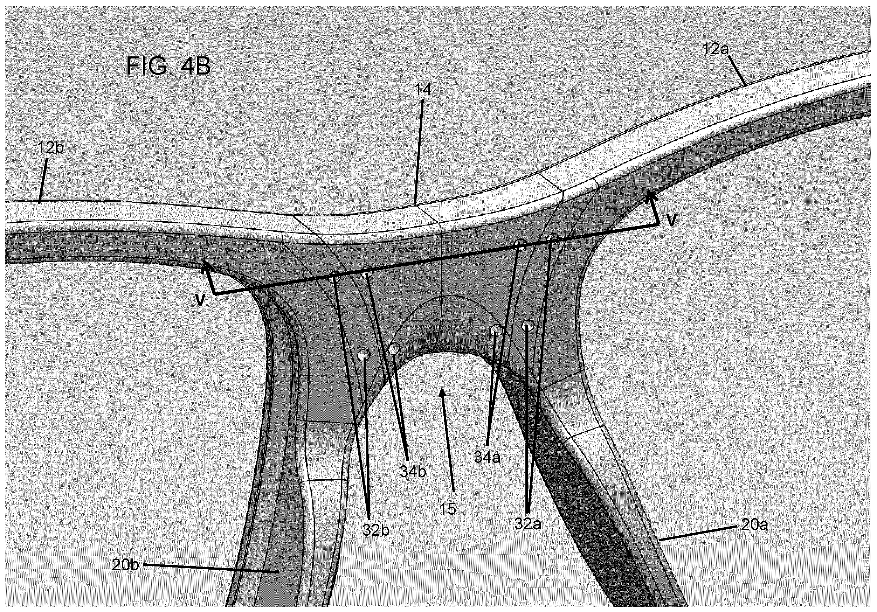

Turning now to FIGS. 4A and 4B, it can be observed that the eyewear 10 can be assembled by inserting the mounting members 16a, 16b into both the lens retainer recesses 26a, 26b at one end, and into the bridge recesses 24a, 24b at the other end. In this example, mounting members 16a, 16b are sized and contoured such that when they are inserted into lens retainer recesses 26a, 26b and bridge recesses 24a, 24b, the peripheral faces of bridge portion 14 bear against the lens retainers 12a, 12b to create a contiguous fit between the flexible bridge portion 14 and the lens retainers 12a, 12b. However, it can be appreciated that the mounting members 16a, 16b may also be wider such that the peripheral faces of bridge 14 do not directly contact the lens retainers 12a, 12b and, as such, the contiguous fit is not necessarily required.

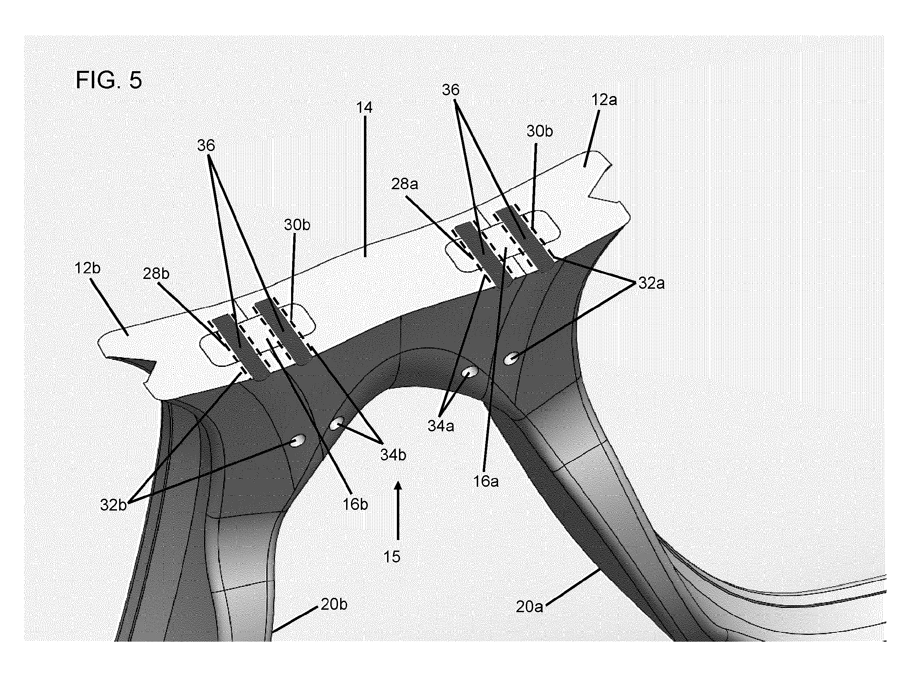

It can be observed additionally from FIG. 5 that when the first mounting member 16a is inserted into the first lens retainer 12a and into the flexible bridge portion 14 as described above, the first lens retainer passages 32a are aligned with the first set of passages 28a, and the first bridge passages 34a are aligned with the second set of passages 30a. Similarly, when the second mounting member 16b is inserted into the second lens retainer 12b and into the flexible bridge portion 14 as described above, the second lens retainer passages 32b are aligned with the first set of passages 28b on the second mounting member 16b, and the second bridge passages 34b are aligned with the second set of passages 30b on the second mounting member 16b. These alignments enable the components to be attached to each other.

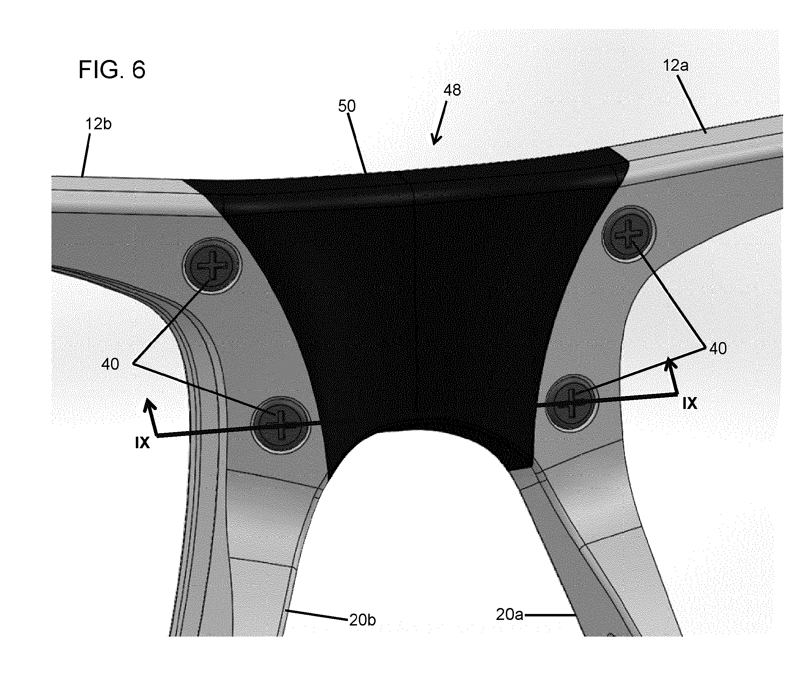

Fastening material, or more generally fasteners 36 may be inserted through the aligned passages 28a and 32a, 28b and 32b, 30a and 34a, and 30b and 34b to join the flexible bridge portion 14 to the lens retainers 12a, 12b via the mounting members 16a, 16b. In one implementation, the fasteners 36 are provided by injecting a fastening material such as a resin, which may be poured or otherwise introduced into the aligned passages 28a and 32a, 28b and 32b, 30a and 34a, and 30b and 34b after assembly of the bridge 14, lens retainers 12a, 12b, and mounting members 16a, 16b, then hardened or set. The fasteners 36 may then be buffed or polished such that they are flush with the bridge portion 14 and surfaces of the lens retainers 12 for aesthetic purposes. In an alternate embodiment, fasteners 36 may be screws (e.g., as seen in FIG. 6), dowels, adhesive, rivets or any suitable fastening device.

FIGS. 6 through 9 illustrate another implementation of the flexible bridge assembly denoted by numeral 48. In this implementation, a flexible bridge portion 50 is created by overmolding a flexible material onto connecting ends, as described in greater detail below. This forms a bridge assembly 48 which can be attached to lens retainers 12a, 12b by fasteners 40, such as the screws shown in FIG. 6.

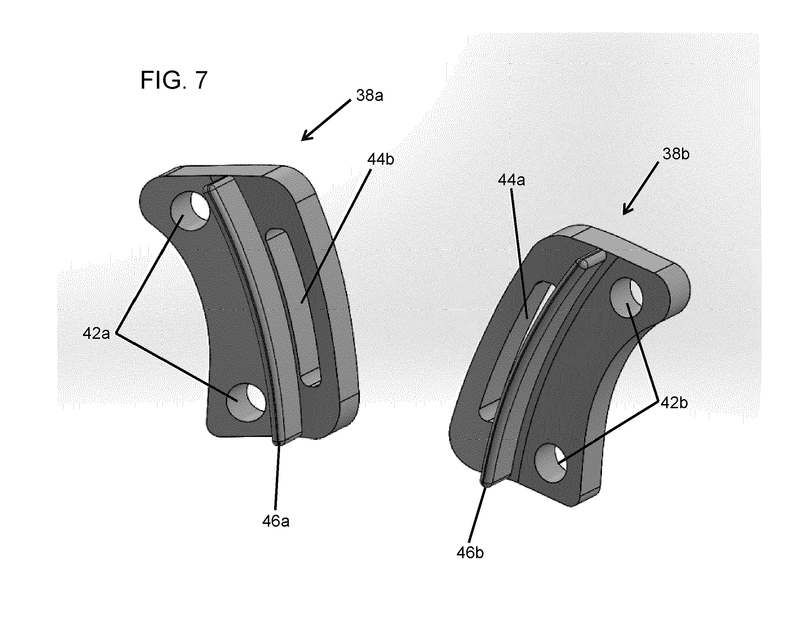

The connecting ends 38 used to join the overmolded flexible bridge portion 50 to the lens retainers 12a, 12b are shown in FIG. 7. In this example, a first connecting end 38a joins the first lens retainer 12a to the overmolded bridge portion 50, and a second connecting end 38b joins the second lens retainer 12b to the overmolded bridge portion 50. The connecting ends 38a, 38b are made from a rigid material to provide stability and support for the eyewear 10 when the overmolded bridge 48 is attached to the lens retainers 12a, 12b. The connecting ends 38a, 38b may be made from metal by machining or stamping, or from polymers such as polycarbonate. It should be apparent that any other rigid material may also be used to form the connecting ends 38a, 38b using methods commonly used in the art.

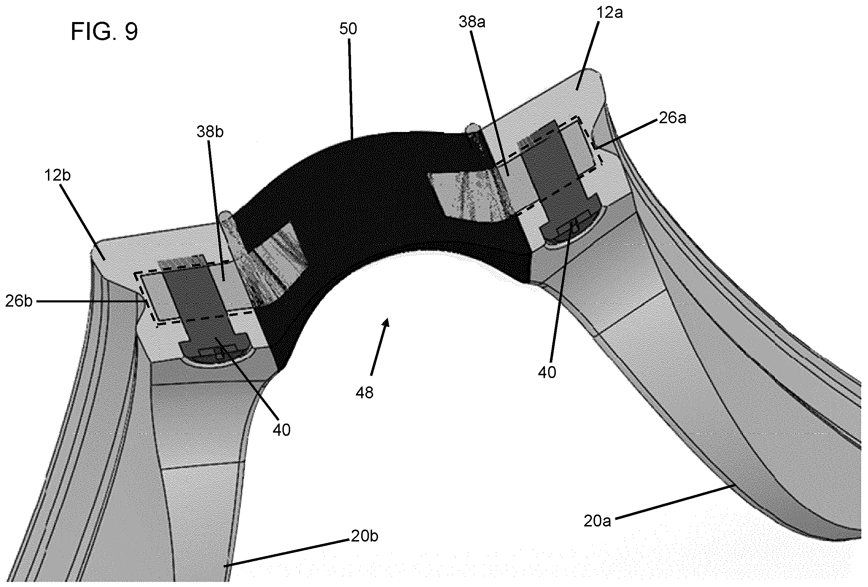

One side of the connecting ends 38 may be provided with one or more slots 44 (or other passages) for receiving material during the overmolding process, as described in detail below. In this example, the first connecting end 38a is provided with an elongated slot 44a, and the second connecting end 38b is provided with an elongated slot 44b. The connecting ends 38 may also be provided with attachment passages 42, which may be threaded for receiving a screw. In this example, the first connecting end 38a is provided with two first attachment passages 42a, and the second connecting end 38b is provided with two second attachment passages 42b. The slots 44a, 44b and attachment passages 42a, 42b may be separated by ridges 46. In this example, first connecting end 38a is provided with first ridge 46a on one face, and second connecting end 38b is provided with second ridge 46b on one face. The ridges 46a, 46b can be provided for stability when brought against the lens retainers 12a, 12b as shown in FIG. 9.

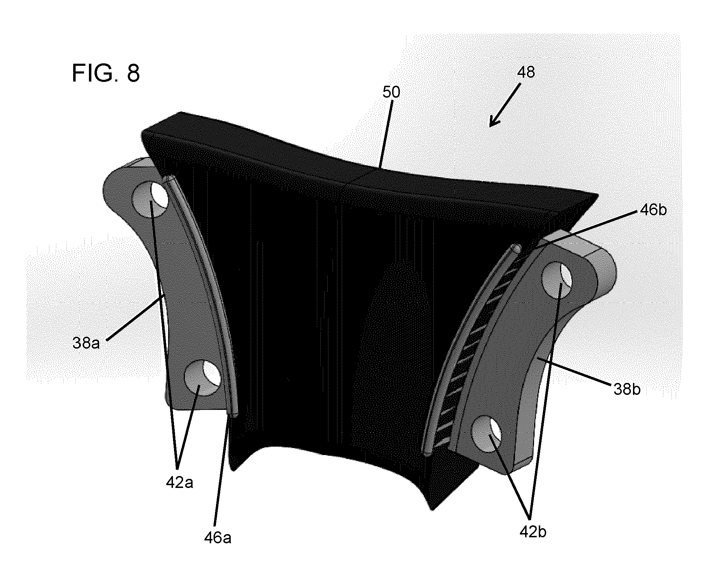

The material that forms the overmolded bridge portion 50 can be overmolded on the connecting ends 38a, 38b to create the flexible bridge assembly 48 that can then be joined to the lens retainers 12a, 12b in constructing the eyewear 10, as illustrated in FIG. 8. The construction of the flexible bridge assembly 48 can be done using any suitable overmolding process. Overmolding, sometimes referred to as two times injection molding, is a process where a single part is created using two or more different materials in combination. Typically, the first material (or substrate) is partially or fully covered by overmolded material during the manufacturing process. In this case, a portion of the connecting ends 38a, 38b act as the substrate that is overmolded with the material used to create the overmolded bridge 50.

The overmolded material is generally an elastomer such as thermoplastic polyurethane (TPU), rubber or thermoplastic rubber (TRP), soft plastic, or any other suitable material. The material may be molded such that peripheral faces of the overmolded bridge 50 at least partially bear against the raised ridges 46a, 46b. It can be appreciated that the flexible material would typically be overmolded to the connecting ends 38a, 38b prior to attaching the bridge assembly 48 to the lens retainers 12a, 12b. That is, the bridge assembly 48 is preferably constructed as a separate component that is incorporated into the assembly process.

It can be observed from FIG. 7 that the connecting ends 38a, 38b can be provided with the one or more slots 44a, 44b for the overmolding process. The material of the overmolded bridge 50 may flow through the slots 44a, 44b during the overmolding process and fill those slots 44a, 44b to provide additional gripping and encapsulation of connecting ends 38a, 38b, forming a stronger hold between the overmolded bridge portion 50 and the connecting ends 38a, 38b. It can be appreciated that the elongated slots 44a, 44b are shown in FIG. 7 for illustrative purposes only and any one or more slots or holes of any geometry can be used.

FIGS. 6 and 9 show that the eyewear 10 may be assembled by inserting the connecting ends 38a, 38b of bridge assembly 48 into the lens retainer recesses 26a, 26b of lens retainers 12a, 12b, aligning lens retainer passages 32a, 32b with attachment passages 42a, 42b similar to the first implementation described above. Fasteners 40 may be inserted into attachment passages 42a, 42b through lens retainer passages 32a, 32b to secure connecting ends 38a, 38b in place, thereby joining overmolded flexible bridge portion 50 to the lens retainers 12a, 12b. In this example, the fasteners 40 are screws and attachment passages 42 are threaded to hold fasteners 40. However, it can be appreciated that other fasteners and fastening techniques and mechanisms can be utilized.

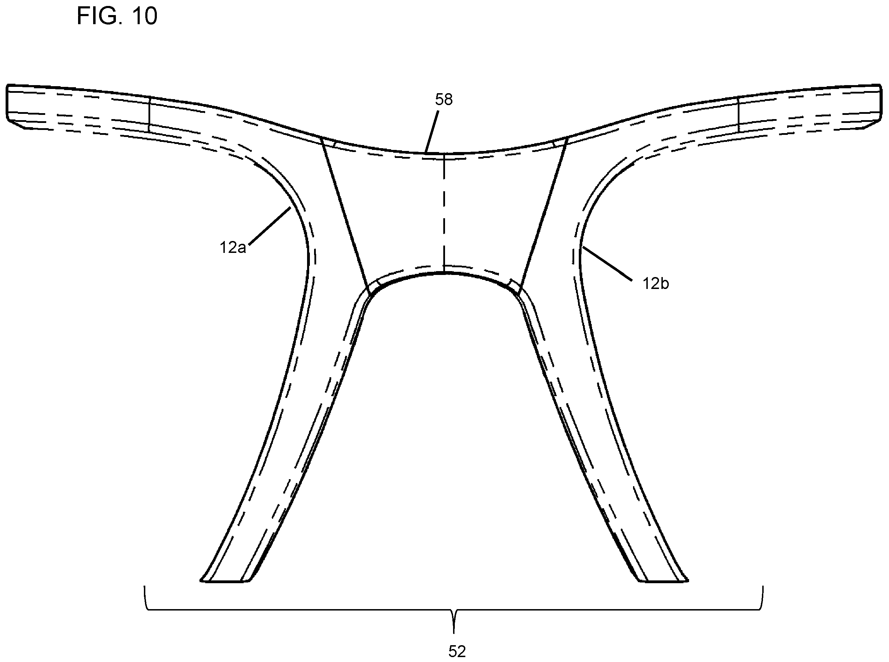

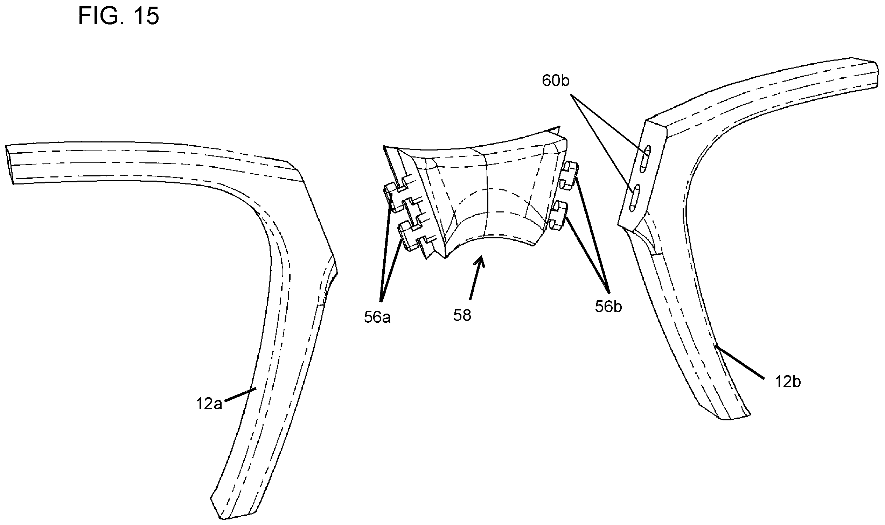

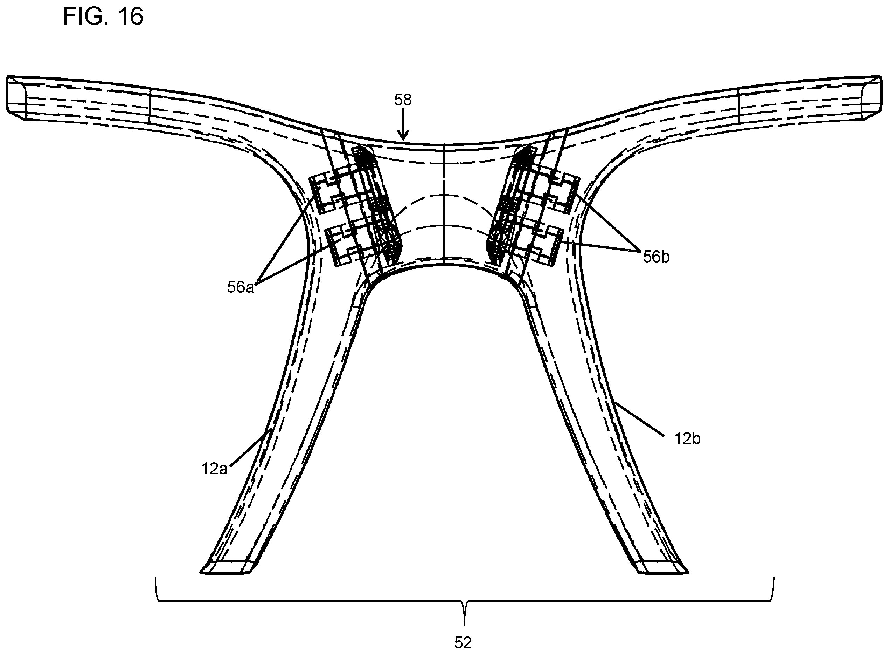

FIGS. 10 through 16 illustrate another implementation of the flexible bridge assembly denoted by numeral 52. In this implementation, a flexible bridge portion 58 is created by overmolding a flexible material onto connecting ends 54, as described in greater detail below. This forms a bridge assembly 52 which can be attached to lens retainers 12a, 12b.

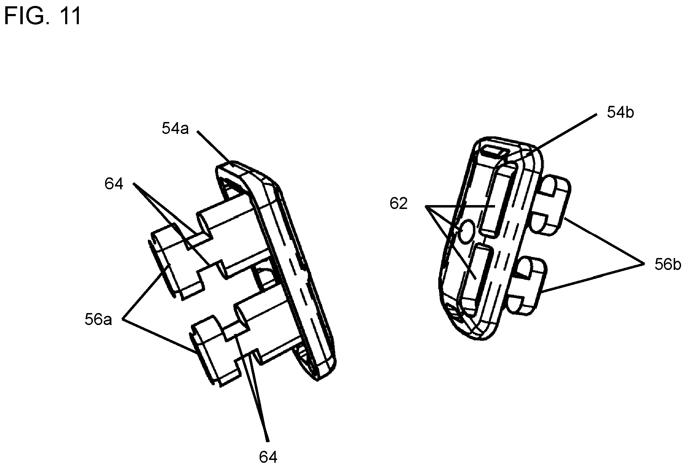

The connecting ends 54 can be used to join the overmolded flexible bridge portion 50 to the lens retainers 12a, 12b. In this example, at least one prong 56a protrudes from first connecting end 54a and joins the first lens retainer 12a to the overmolded bridge portion 58, and at least one prong 56b protrudes from second connecting end 54b and joins the second lens retainer 12b to the overmolded bridge portion 58. This embodiment is shown in FIG. 11. The connecting ends 54a, 54b are made from a rigid material to provide stability and support for the eyewear 10 when the overmolded bridge 58 is attached to the lens retainers 12a, 12b. The connecting ends 54a, 54b may be made from metal by machining or stamping, or from polymers such as polycarbonate. It should be apparent that any other rigid material may also be used to form the connecting ends 54a, 54b using methods commonly used in the art.

One side of the connecting ends 54 may be provided with one or more passages 62 for receiving material during the overmolding process, as described in detail below.

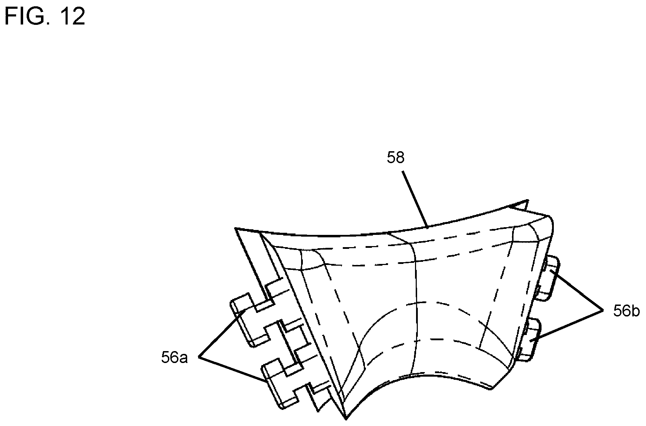

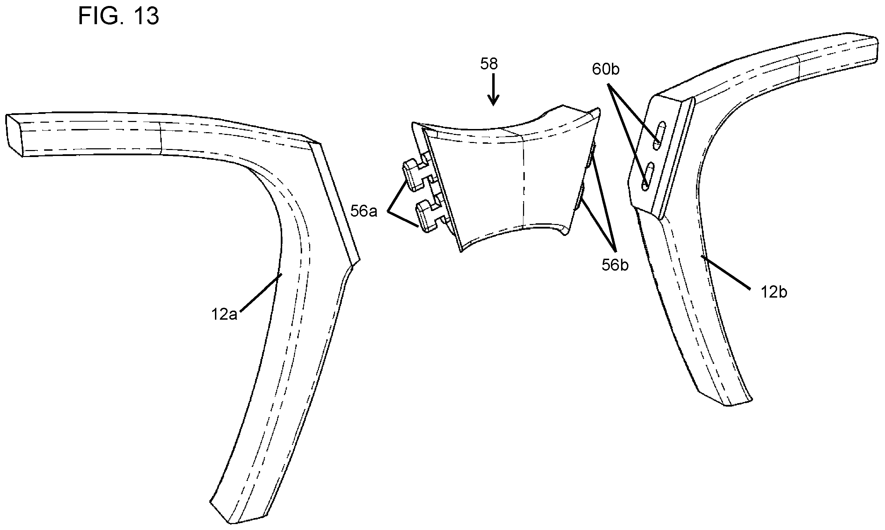

The material that forms the overmolded bridge portion 58 can be overmolded on the connecting ends 54a, 54b to create the flexible bridge assembly 48 that can then be joined to the lens retainers 12a, 12b in constructing the eyewear 10, as illustrated in FIG. 12 and 13. The construction of the flexible bridge assembly 52 can be done using any suitable overmolding process. In this case, a portion of the connecting ends 54a, 54b act as the substrate that is overmolded with the material used to create the overmolded bridge 58. The prongs 56 may also act as the substrate that is overmolded.

The overmolded material is generally an elastomer such as thermoplastic polyurethane (TPU), rubber or thermoplastic rubber (TRP), soft plastic, or any other suitable material. It can be appreciated that the flexible material would typically be overmolded to the connecting ends 54a, 54b prior to attaching the bridge assembly 52 to the lens retainers 12a, 12b. That is, the bridge assembly 52 is preferably constructed as a separate component that is incorporated into the assembly process.

It can be observed from FIG. 11 and 12 that the connecting ends 54a, 54b can be provided with the one or more passages 62 for the overmolding process. The material of the overmolded bridge 58 may flow through the passages 62 during the overmolding process and fill those passages 62 to provide additional gripping and encapsulation of connecting ends 54a, 54b, forming a stronger hold between the overmolded bridge portion 58 and the connecting ends 54a, 54b. It can be appreciated that the elongated passages 62 are shown in FIG. 11 for illustrative purposes only and any one or more slots or holes of any geometry can be used. FIG. 12 illustrates an embodiment of the connecting ends 54a, 54b, which are overmolded to form the overmolded bridge 58.

The prongs 56 may include notches 64 for securing the flexible bridge portion 50 to the lens retainers 12. One side of the lens retainer 12a may be provided with slots 60a for receiving the prongs 56a and one side of the lens retainer 12b may be provided with slots 60b for receiving the prongs 56b; as illustrated in FIG. 13.

Fasteners such as screws may also be used to join the flexible bridge assembly 50 to the lens retainers 12. The flexible bridge assembly 50 and lens retainers 12 may include passages which align such that the fasteners are inserted, the aligned passages join the flexible bridge assembly 50 to the first and second lens retainers 12a, 12b.

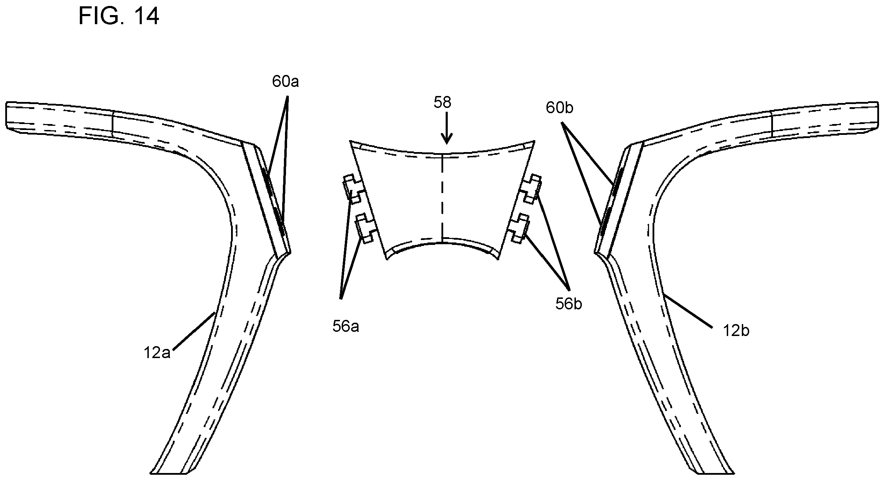

FIGS. 14, 15 and 16 show that the eyewear 10 may be assembled by inserting or snapping the prongs 54a, 54b of bridge assembly 48 into the lens retainer recesses 60 of lens retainers 12a, 12b. Snapping the prongs 56 into the lens retainer recesses 60 can cause the prongs to deform slightly to be seated within the lens retainer recesses 60. The overmolded bridge 58 can be snapped into the lens retainer recesses 60 permanently or detachably, depending on the shape of the prongs 56 and lens retainer recess 60.

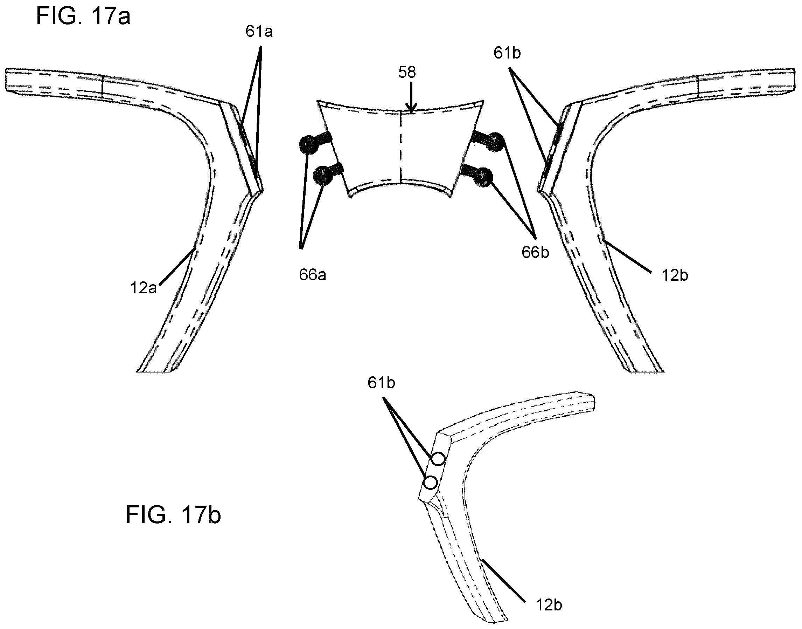

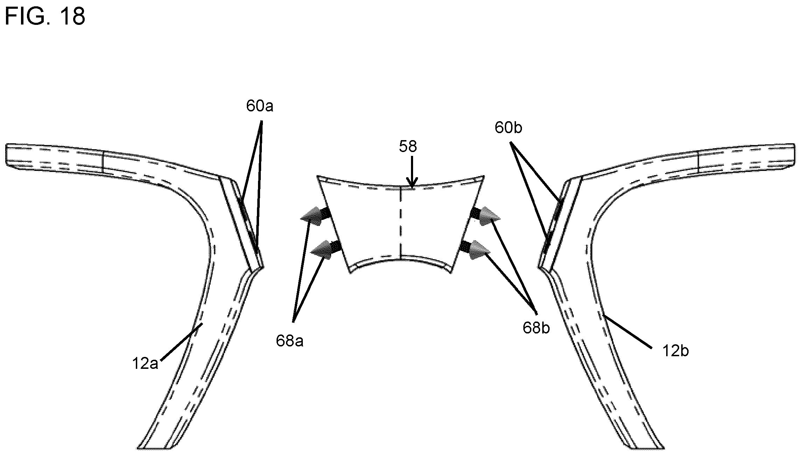

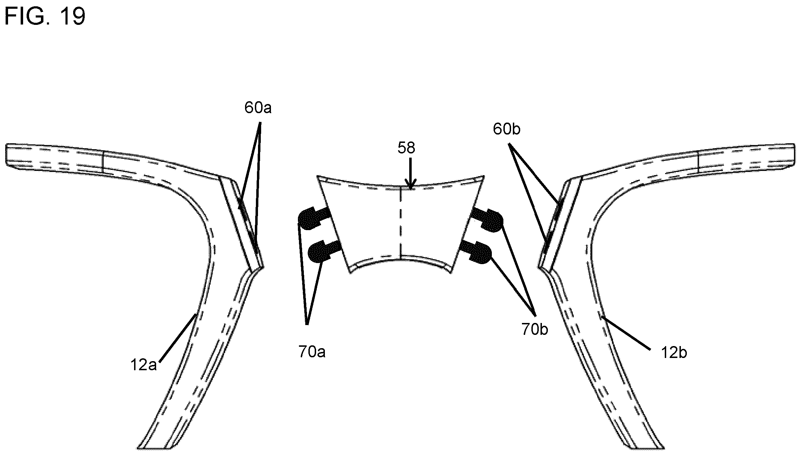

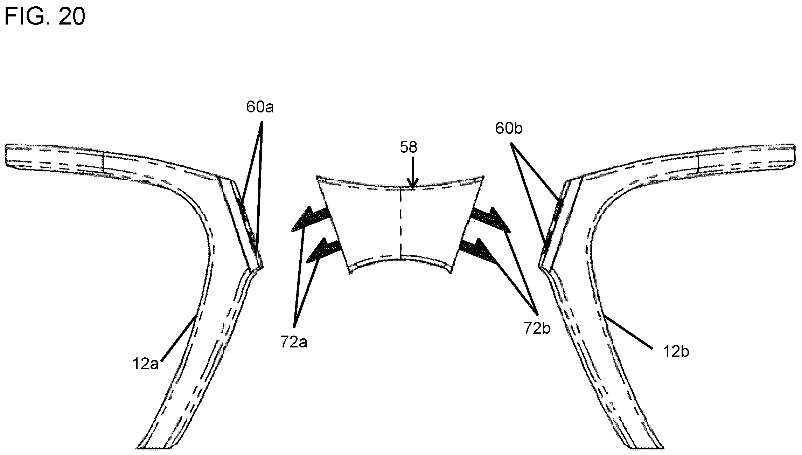

Figures 17, 18, 19 and 20 show alternative prong designs which can be used including spherical prongs 66, conical prongs 68, 'D' prongs 70, and saw-tooth prongs 72. The lens retainer recesses 61, 60 can be shaped to match the shape of the prongs 70. In FIG. 17a, the prongs 66 are spherical in shape and thus, in the partial perspective view (FIG 17b) of the lens retainer 12b, it can be seen that the lens retainer recesses 61 are shaped in a circular manner; such that the prongs 66 can be snapped into the lens retainer recesses 61. The shape of the lens retainer recesses 60 is dictated by the shape of the prong 66, 68, 70 or 72 that is to be inserted. Some prong shapes such as spherical prongs 66 are detachably snapped into the lens retainer recesses 61, such that they can be disjoined in needed. Other prong shapes such as the saw-tooth prongs 72 can permanently attach the overmolded bridge 58 to the lens retainer 12.

For simplicity and clarity of illustration, where considered appropriate, reference numerals may be repeated among the figures to indicate corresponding or analogous elements. In addition, numerous specific details are set forth in order to provide a thorough understanding of the examples described herein. However, it will be understood by those of ordinary skill in the art that the examples described herein may be practiced without these specific details. In other instances, well-known methods, procedures, and components have not been described in detail so as not to obscure the examples described herein. Also, the description is not considered as limiting the scope of the examples described herein.

It will be appreciated that the examples and corresponding diagrams used herein are for illustrative purposes only. Different configurations and terminology can be used without departing from the principles expressed herein. For instance, components and modules can be added, deleted, modified, or arranged with differing connections without departing from these principles.

Although the above principles have been described with reference to certain specific examples, various modifications thereof will be apparent to those skilled in the art as outlined in the appended claims.

## Claims

1. A method of constructing an eyewear comprising:
overmolding a flexible material onto first and second rigid connecting ends to create a flexible bridge portion, and form a flexible bridge assembly comprising the flexible bridge portion, the first rigid connecting end partially embedded in the flexible bridge portion at one end, and the second rigid connecting end partially embedded in the flexible bridge portion at the other end; **characterised in**
joining the overmolded flexible bridge assembly to a first lens retainer and a second lens retainer of the eyewear to construct the eyewear, wherein the first and second rigid connecting ends provide attachment portions for joining the flexible bridge assembly to the first and second lens retainers.

2. The method of claim 1, wherein at least one of the first and second rigid connecting ends comprises one or more prongs protruding therefrom.

3. The method of claim 1, wherein at least one of the first and second rigid connecting ends comprises one or more slots through which the flexible material flows during the overmolding.

4. The method of claim 1, wherein at least one of the first and second rigid connecting ends comprising a raised ridge, wherein peripheral faces of the flexible bridge portion at least partially bear against the raised ridge during overmolding.

5. The method of claim 1, wherein at least one of the first and second rigid connecting ends comprising one or more passages through which the flexible material flows during the overmolding.

6. The method of claim 1, wherein the first and second rigid connecting ends are connected to the first and second lens retainers respectively via a fastening mechanism.

7. The method of claim 6, wherein the fastening mechanism comprises a plurality of fasteners.

8. The method of claim 1, wherein joining the flexible bridge assembly to the first and second lens retainers further comprising:
aligning one or more attachment passages provided on each of the first and second connecting ends with one or more lens retainer passages provided on the respective first and second lens retainers; and
inserting one or more fasteners through the one or more attachment passages and the lens retainer passages to secure the first and second connecting ends in place, thereby joining the flexible bridge assembly to the first and second lens retainers.

9. The method of claim 1, wherein joining the flexible bridge assembly to the first and second lens retainers comprising:
inserting outwardly extending ends of the first and second rigid connecting ends from the flexible bridge assembly into respective lens retainer recesses provided in the first and second lens retainers, wherein a shape of each of the first and second rigid connecting ends is complementary to a shape of the respective lens retainer recesses.

## Patentansprüche

1. Verfahren zum Herstellen einer Brille, umfassend:
Umspritzen eines flexiblen Materials auf ein erstes und ein zweites starres Verbindungsende, um einen flexiblen Brückenabschnitt zu schaffen, und Formen einer flexiblen Brückenanordnung, umfassend den flexiblen Brückenabschnitt, das erste starre Verbindungsende, das an einem Ende teilweise in den flexiblen Brückenabschnitt eingebettet ist, und das zweite starre Verbindungsende, das am anderen Ende teilweise in den flexiblen Brückenabschnitt eingebettet ist;
**dadurch gekennzeichnet, dass** die umspritzte flexible Brückenanordnung an eine erste Linsenhalterung und eine zweite Linsenhalterung der Brille gefügt wird, um die Brille herzustellen, wobei das erste und das zweite starre Verbindungsende Anbringungsabschnitte zum Anfügen der flexiblen Brückenanordnung an die erste und die zweite Linsenhalterung bereitstellen.

2. Verfahren nach Anspruch 1, wobei mindestens eines der ersten und zweiten starren Verbindungsenden einen oder mehrere davon vorstehende Zinken umfasst.

3. Verfahren nach Anspruch 1, wobei mindestens eines der ersten und zweiten starren Verbindungsenden einen oder mehrere Schlitze umfasst, durch die das flexible Material während des Umspritzens fließt.

4. Verfahren nach Anspruch 1, wobei mindestens eines der ersten und zweiten starren Verbindungsenden einen erhöhten Kamm umfasst, wobei die randseitigen Flächen des flexiblen Brückenabschnitts während des Umspritzens zumindest teilweise an dem erhöhten Kamm anliegen.

5. Verfahren nach Anspruch 1, wobei mindestens eines der ersten und zweiten starren Verbindungsenden eine oder mehrere Durchführungen umfasst, durch die das flexible Material während des Umspritzens fließt.

6. Verfahren nach Anspruch 1, wobei das erste und das zweite starre Verbindungsende über einen Befestigungsmechanismus jeweils mit der ersten und der zweiten Linsenhalterung verbunden sind.

7. Verfahren nach Anspruch 6, wobei der Befestigungsmechanismus eine Vielzahl von Befestigungselementen umfasst.

8. Verfahren nach Anspruch 1, wobei das Anfügen der flexiblen Brückenanordnung an die erste und die zweite Linsenhalterung weiter umfasst:
Ausrichten eines oder mehrerer Anbringungsdurchführungen, die an jedem der ersten und der zweiten Verbindungsenden vorgesehen sind, mit einem oder mehreren Linsenhalterungsdurchführungen, die an den jeweiligen ersten und zweiten Linsenhalterungen vorgesehen sind; und
Einsetzen eines oder mehrerer Befestigungselemente durch die eine oder mehreren Anbringungsdurchführungen und die Linsenhalterungsdurchführungen, um das erste und das zweite Verbindungsende an Ort und Stelle zu sichern, wodurch die flexible Brückenanordnung an die erste und die zweite Linsenhalterung gefügt werden.

9. Verfahren nach Anspruch 1, wobei das Anfügen der flexiblen Brückenanordnung an die erste und die zweite Linsenhalterung umfasst:
Einführen der sich nach außen erstreckenden Enden des ersten und des zweiten starren Verbindungsendes von der flexiblen Brückenanordnung in jeweilige Linsenhalterungsaussparungen, vorgesehen in der ersten und der zweiten Linsenhalterung, wobei eine Gestalt jedes des ersten und des zweiten starren Verbindungsendes komplementär zu einer Gestalt der jeweiligen Linsenhalterungsaussparungen ist.

## Revendications

1. Procédé de construction de lunettes comprenant :
le surmoulage d'un matériau flexible sur les première et deuxième extrémités de liaison rigides pour créer une portion de pont flexible, et former un ensemble de pont flexible comprenant la portion de pont flexible, la première extrémité de liaison rigide partiellement intégrée dans la portion de pont flexible à une extrémité, et la deuxième extrémité de liaison rigide partiellement intégrée dans la portion de pont flexible à l'autre extrémité ;
caractérisé en reliant l'ensemble de pont flexible surmoulé à un premier dispositif de retenue de lentille et à un deuxième dispositif de retenue de lentille des lunettes pour construire les lunettes, dans lequel les première et deuxième extrémités de liaison rigides fournissent des portions de fixation pour relier l'ensemble de pont flexible aux premier et deuxième dispositifs de retenue de lentille.

2. Procédé selon la revendication 1, dans lequel au moins l'une des première et deuxième extrémités de liaison rigides comprend une ou plusieurs griffes faisant saillie de celle-ci.

3. Procédé selon la revendication 1, dans lequel au moins l'une des première et deuxième extrémités de liaison rigides comprend une ou plusieurs fentes dans lesquelles le matériau flexible s'écoule pendant le surmoulage.

4. Procédé selon la revendication 1, dans lequel au moins l'une des première et deuxième extrémités de liaison rigides comprend une crête surélevée, dans lequel des faces périphériques de la portion de pont flexible supportent au moins partiellement la crête surélevée pendant le surmoulage.

5. Procédé selon la revendication 1, dans lequel au moins l'une des première et deuxième extrémités de liaison rigides comprend un ou plusieurs passages à travers lesquels le matériau flexible s'écoule pendant le surmoulage.

6. Procédé selon la revendication 1, dans lequel les première et deuxième extrémités de liaison rigides sont reliées aux premier et deuxième dispositifs de retenue de lentille respectivement via un mécanisme de fixation.

7. Procédé selon la revendication 6, dans lequel le mécanisme de fixation comprend une pluralité d'attaches.

8. Procédé selon la revendication 1, dans lequel l'assemblage de l'ensemble pont flexible aux premier et deuxième dispositifs de retenue de lentille comprend en outre :
l'alignement d'un ou plusieurs passages de fixation fournis sur chacune des première et deuxième extrémités de liaison avec un ou plusieurs passages de dispositif de retenue de lentille fournis sur les premier et deuxième dispositifs de retenue de lentille respectifs ; et
l'insertion d'une ou plusieurs attaches à travers les un ou plusieurs passages de fixation et les passages de dispositif de retenue de lentille pour fixer les première et deuxième extrémités de liaison en place, l'ensemble pont flexible étant ainsi relié aux premier et deuxième dispositifs de retenue de lentille.

9. Procédé selon la revendication 1, dans lequel l'assemblage de l'ensemble pont flexible aux premier et deuxième dispositifs de retenue de lentille comprend :
l'insertion d'extrémités s'étendant vers l'extérieur des première et deuxième extrémités de liaison rigides à partir de l'ensemble pont flexible dans des évidements de dispositif de retenue de lentille respectifs fournis dans les premier et deuxième dispositifs de retenue de lentille, dans lequel une forme de chacune des première et deuxième extrémités de liaison rigides est complémentaire à une forme des évidements de dispositif de retenue de lentille respectifs.
